# EUROPÄISCHE PATENTSCHRIFT

(11) **EP 3 339 363 B1**
(45) Veröffentlichungstag und Bekanntmachung des Hinweises auf die Patenterteilung: **09.12.2020**
(21) Anmeldenummer: 17197266.4
(22) Anmeldetag: 19.10.2017
(51) Int. Cl.: C08K 3/08, C08L 9/00, B60C 1/00, C08K 3/04

(54) **SCHWEFELVERNETZBARE KAUTSCHUKMISCHUNG, VULKANISAT DER KAUTSCHUKMISCHUNG UND FAHRZEUGREIFEN**
SULPHUR-LINKABLE RUBBER COMPOUND, VULCANIZATE OF THE RUBBER COMPOUND AND VEHICLE TYRES
MÉLANGE DE CAOUTCHOUC RÉTICULABLE AU SOUFRE, VULCANISATION DE MÉLANGE DE CAOUTCHOUC ET PNEUMATIQUE POUR VÉHICULE

(30) Priorität: 20.12.2016 DE 102016225581
(43) Veröffentlichungstag der Anmeldung: 27.06.2018
(73) Patentinhaber: Continental Reifen Deutschland GmbH, 30165 Hannover (DE)
(72) Erfinder: Hallmann, Steffen, 30171 Hannover (DE); Müller, Matthias-Stephan, 30827 Garbsen (DE); Minx, Carsten, 31535 Neustadt (DE)
(74) Vertreter: Finger, Karsten

(56) Entgegenhaltungen:
- US-A- 5 739 198
- US-A1- 2006 063 878
- US-A1- 2008 149 248
- US-A1- 2016 177 076
- US-B1- 6 581 659

## Beschreibung

Die Erfindung betrifft eine schwefelvernetzbare Kautschukmischung, deren Vulkanisat und einen Fahrzeugreifen.

Fahrzeugreifen müssen verschiedenen Anforderungen im Straßenverkehr gerecht werden. So spielt der Abrieb, insbesondere des Laufstreifens, für die Haltbarkeit des Reifens, aber auch für die Umweltbelastung eine wichtige Rolle. Scharfe Straßenbeläge, Schlaglöcher, Geröll und spitze Steine, besonders bei Offroad-Reifen wie Reifen für Minenfahrzeuge, mit viel oder zeitweisem Geländeeinsatz, können zu teilweise schlagartigen Abbröckelungen und damit zu größerem Materialverlust, dem sogenannten "Chip & Chunk", führen. Risse und Löcher im Laufstreifen pflanzen sich durch die Umfangskräfte im Fahrbetrieb normalerweise radial nach innen fort und können dann bis zum Gürtel durchgehen. Dies führt in der Folge dazu, dass der Stahl des Gürtelpaketes des Reifens korrodiert und damit instabiler wird. Man ist bestrebt, Reifen durch eine geeignete Konstruktion sowie eine gegenüber Abrieb und Chip & Chunk möglichst widerstandsfähige Kautschukmischung im Laufstreifen länger haltbar zu gestalten und damit letztlich auch die Sicherheit im Einsatz und im Straßenverkehr zu erhöhen.

Ruße werden im Allgemeinen als Füllstoffe zur Verstärkung von Kautschukmischungen verwendet. Eine Vielzahl von Rußtypen, insbesondere die ASTM-Ruße nach ASTM D1765, sind dem Fachmann bekannt und unterscheiden sich hinsichtlich der Oberfläche und Struktur. Die verschiedenen Rußtypen werden zur Optimierung verschiedener Reifeneigenschaften verwendet, wie zum Beispiel in der Laufstreifenmischung zur Erhöhung der Abriebresistenz und der Härte. Die Abriebresistenz kann zur Erhöhung der Laufleistung und die Erhöhung der Härte zu einer Erhöhung der Resistenz gegen Schnitte führen. Mit zunehmender Konzentration an Rußen können diese Eigenschaften in Abhängigkeit der Mischung optimiert werden.
Ein großer Nachteil von steigenden Konzentration dieser bekannten Ruße ist jedoch die Verringerung der Bruchdehnung. Die Bruchdehnung hat jedoch einen sehr starken Einfluss auf die Resistenz gegen Schnitte; hier nimmt die Resistenz gegen Schnitte mit sinkender Bruchdehnung ab. Schnitte, insbesondere im Laufstreifen, können in der Folge zu dem oben beschrieben "Chip & Chunk"-Phänomen führen. Es existiert somit ein Zielkonflikt zwischen dem Abriebwiederstand und der "Chip & Chunk"-Resistenz einer Kautschukmischung.
Der Erfindung liegt daher die Aufgabe zugrunde, eine schwefelvernetzbare Kautschukmischung bereitzustellen, die auf einem hohen Härte-Niveau gleichzeitig eine ausreichende Bruchdehnung aufweist. Im Vergleich zu Kautschukmischungen enthaltend konventionelle Ruße, wie insbesondere die oben beschriebenen ASTM-Ruße soll die Bruchdehnung höher sein. Die schwefelvernetzbare Kautschukmischung soll somit eine hohe Abriebresistenz bei einer gleichzeitig guten "Chip & Chunk"-Resistenz.
Die Aufgabe wird erfindungsgemäß dadurch gelöst, dass die schwefelvernetzbare Kautschukmischung wenigstens die folgenden Bestandteile enthält:
wenigstens einen Dienkautschuk, der ausgewählt ist aus der Gruppe bestehend aus synthetischem Polyisopren (IR) und natürlichem Polyisopren (NR) und Styrol-Butadien-Kautschuk (SBR) und Polybutadien (BR) und Butylkautschuk(IIR) und Halobulylkautschuk,
und 3 bis 200 phr wenigstens eines Rußes A, welcher eine Jodadsorptionszahl gemäß ASTM D 1510 von 100 bis 140 g/kg und eine DBP-Zahl gemäß ASTM D2414 von 50 bis 75 ml/100 g aufweist.

Überraschenderweise weist die Kautschukmischung enthaltend wenigstens einen der genannten Ruße A eine vergleichsweise hohe Bruchdehnung, eine sehr gute Resistenz gegenüber Rissfortpflanzung bei einer hohen Härte und hohen Abriebresistenz auf. Gleichzeitig verbleiben die übrigen Reifeneigenschaften auf einem annähernd gleich hohen Niveau oder werden sogar verbessert oder zumindest nicht signifikant verschlechtert.

Ein weiterer Gegenstand der vorliegenden Erfindung ist ein Vulkanisat wenigstens einer erfindungsgemäßen Kautschukmischung.
Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist. Bevorzugt weist der Fahrzeugreifen das wenigstens eine Vulkanisat zumindest im Laufstreifen auf.
Das erfindungsgemäße Vulkanisat und der erfindungsgemäße Fahrzeugreifen zeichnen sich durch eine erhöhte Resistenz gegenüber Rissen und Rissfortpflanzung aus bei einer gleichzeitig hohen Abriebresistenz. Ein Fahrzeugreifen der das erfindungsgemäße Vulkanisat in wenigstens einem Bauteil, insbesondere wenigstens im Laufstreifen, aufweist liegt auf einem höheren Niveau im Zielkonflikt aus Abrieb und Chip & Chunk

Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Cap wenigstens ein erfindungsgemäßes Vulkanisat der erfindungsgemäßen Kautschukmischung auf.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.
Die erfindungsgemäße Kautschukmischung ist ferner auch für andere Bauteile von Fahrzeugreifen geeignet, wie z. B. insbesondere dem, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens in einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.
Erfindungsgemäß enthält die Kautschukmischung wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Die Kautschukmischung ist insbesondere für Fahrzeugreifen geeignet, wobei sie prinzipiell in jedem Bauteil verwendet werden kann, wie insbesondere dem Laufstreifen, der Seitenwand, dem Hornprofil, sowie in sonstigen sogenannten Body-Bauteilen.

Der Dienkautschuk wird aus der Gruppe bestehend aus synthetischem Polyisopren (IR) und natürlichem Polyisopren (NR) und Styrol-Butadien-Kautschuk (SBR) und Polybutadien (BR) und Butylkautschuk (IIR) und Halobutylkautschuk ausgewählt. Gemäß einer besonders bevorzugten Ausführungsform der Erfindung ist der Dienkautschuk ausgewählt aus der Gruppe bestehend aus synthetischem Polyisopren (IR) und natürlichem Polyisopren (NR) und Styrol-Butadien-Kautschuk (SBR) und Polybutadien (BR). Eine derartige Kautschukmischung ist insbesondere für den Laufstreifen und/oder die Seitenwand von Fahrzeugreifen geeignet.
Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisopren(en) denkbar.
Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.
Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.
Erfindungsgemäß enthält die schwefelvernetzbare Kautschukmischung wenigstens einen Ruß A. Der erfindungsgemäß enthaltene Ruß A weist eine Jodadsorptionszahl gemäß ASTM D 1510 von 100 bis 140 g/kg und eine DBP-Zahl gemäß ASTM D 2414 von 50 bis 75 ml/100 g auf. Dieser Ruß A zeichnet sich somit durch eine vergleichsweise niedrige DBP Zahl bei einer vergleichsweise hohen Jodabsorptionszahl aus. Bevorzugt beträgt die Jodadsorptionszahl 110 bis 130 g/kg. Der erfindungsgemäß enthaltene Ruß A weist dabei bevorzugt eine Stickstoff-Oberfläche gemäß ASTM D6556 von 100 bis 130 m²/g auf.
Ein derartiger Ruß ist beispielsweise unter dem Handelsnamen Raven ® 1200 der Firma Birla Carbon erhältlich.

Der erfindungsgemäß enthaltene Ruß A ist dabei bevorzugt ein Industrieruß.

Die Menge des wenigstens einen Rußes A beträgt 3 bis 200 phr, bevorzugt 40 bis 200 phr, besonders bevorzugt 40 bis 150 phr, ganz besonders bevorzugt 40 bis 100 phr und wiederum besonders bevorzugt 50 bis 100 phr, wobei auch ein Gemisch zweier oder mehrerer Ruße des beschriebenen Types A enthalten sein können. Die angegebenen Mengen beziehen sich in jedem Fall auf die Gesamtmenge an enthaltenen Rußen A. Insbesondere mit einer Menge von 50 bis 100 phr wenigstens eines Rußes A weist die erfindungsgemäße Kautschukmischung eine hohe Abriebresistenz bei einer gleichzeitig sehr guten Chip und Chunk-Resistenz auf.

Die erfindungsgemäße Kautschukmischung kann optional weitere Ruße, im Folgenden Ruße B genannt, enthalten. Mögliche weitere Ruße B umfassen insbesondere die oben genannten bereits bekannten ASTM Ruße sowie sonstige dem Fachmann bekannte Ruße für Kautschukmischungen von technischen Gummiartikeln wie Fahrzeugreifen und sonstigen Artikeln.

Gemäß einer Ausführungsform der Erfindung enthält die Kautschukmischung 0,1 bis 10 phr wenigstens eines weiteren Rußes B. Falls die erfindungsgemäße Kautschukmischung wenigstens einen weiteren Ruß B enthält, zählt dieser nicht zu der Gesamtmenge an enthaltenen Rußen A.
Es ist auch denkbar, dass die Kautschukmischung ein Gemisch zweier oder mehrerer Ruße B enthält, wobei die angegebene Menge an Rußen B in jedem Fall die Gesamtmenge an weiteren Rußen B darstellt.

Gemäß einer weiteren besonders vorteilhaften Ausführungsform der Erfindung enthält die Kautschukmischung 0 phr an weiteren Rußen B, d.h. sie ist frei von weiteren Rußen B.

Falls ein weiterer Ruß B in der Kautschukmischung enthalten ist, sind im Rahmen der vorliegenden Erfindung prinzipiell alle dem Fachmann bekannten Ruß-Typen denkbar.

Bevorzugt wird jedoch ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist. Ein besonders geeigneter Ruß im Rahmen der vorliegenden Erfindung ist beispielsweise ein Ruß des ASTM-Typs N339 mit einer Jodadsorptionszahl von 90 g/kg und einer DBP-Zahl von 120 ml/100g. Hiermit werden für die Anwendung im Fahrzeugreifen, insbesondere im Laufstreifen.

Die erfindungsgemäße Kautschukmischung kann ferner optional wenigstens eine Kieselsäure als Füllstoff enthalten Kieselsäuren sind dem Fachmann als verstärkende Füllstoffe bekannt. Bei der optional enthaltenen Kieselsäure kann es sich um alle dem Fachmann bekannten Typen handeln.
Gemäß einer Ausführungsform der Erfindung enthält die Kautschukmischung 0,1 bis 30 phr wenigstens einer Kieselsäure, bevorzugt 5 bis 30 phr mindestens einer Kieselsäure. Es kann sich somit auch um eine sogenannte Teil Silika Mischung handeln.
Die Begriffe "Kieselsäure" und Silika" werden im Rahmen der vorliegenden Erfindung synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m2/g, bevorzugt von 35 bis 260 m2/g, besonders bevorzugt von 70 bis 235 m²/g und ganz besonders bevorzugt von 70 bis 205 m2/g, und eine CTAB-Oberfläche (gemäß ASTM D 3765) von 30 bis 400 m2/g, bevorzugt von 30 bis 255 m2/g, besonders bevorzugt von 65 bis 230 m2/g und ganz besonders bevorzugt von 65 bis 200 m²/g, aufweist.
Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch Kieselsäuren mit einer vergleichsweise niedrigen BET-Oberfläche (wie z. B. Zeosil® 1115 oder Zeosil® 1085 der Firma Solvay) als auch hoch dispergierbare Kieselsäuren, so genannte HD-Kieselsäuren (z. B. Zeosil® 1165 MP der Firma Solvay).

Die erfindungsgemäße Kautschukmischung kann, bevorzugt möglichst geringe Mengen d.h. bevorzugt 0 bis 3 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).
Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filier".
Zinkoxid gehört im Rahmen der vorliegenden Erfindung nicht zu den Füllstoffen.

Die optional enthaltene Kieselsäure kann in Form von angebundene oder nicht angebundene Kieselsäure enthalten sein.
Für den Fall dass die Kieselsäure in Form angebundener Kieselsäure vorliegt, enthält die Kautschukmischung bevorzugt wenigstens ein Silan-Kupplungsagens. Silan-Kupplungsagenzien werden im Rahmen der vorliegenden Erfindung auch als "Silan" bezeichnet.
Hierbei können ein oder mehrere verschiedene Silan-Kupplungsagenzien in Kombination miteinander eingesetzt werden. Die Kautschukmischung kann somit ein Gemisch verschiedener Silane enthalten.
Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß
(Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363® von der Firma Evonik Industries vertrieben werden.
Ferner ist es denkbar, dass eines der oben genannten Mercaptosilane, insbesondere 3-Mercaptopropyltriethoxysilan, in Kombination mit Verarbeitungshilfsmitteln (die unten aufgeführt sind), insbesondere PEG-Carbonsäureester, eingesetzt werden.
Gemäß einer bevorzugten Ausführungsform der Erfindung enthält die Kautschukmischung eine Kombination aus 3-Mercaptopropyltriethoxysilan und PEG-Carbonsäureester, wodurch besonders gute Eigenschaften ergeben, und zwar insbesondere im Hinblick auf die zu lösende technische Aufgabe sowie insgesamt ein gutes Eigenschaftsniveau hinsichtlich der sonstigen Eigenschaften.

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Gemäß einer vorteilhaften Ausführungsform der Erfindung enthält die erfindungsgemäße Kautschukmischung 0,1 bis 20 phr wenigstens eines Kohlenwasserstoffharzes. Hiermit werden insbesondere bei der Anwendung im Reifen der Wärmeaufbau und die Abriebresistenz optimiert, wobei gleichzeitig die dynamischen Eigenschaften der Kautschukmischung (insbesondere deren Elastizitätsmodul) eingestellt werden.
Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.
Das Kohlenwasserstoffharz kann ein Homopolymer oder ein Copolymer sein. Unter Homopolymer wird in der vorliegenden Anmeldung allgemein ein Polymer verstanden, welches gemäß Römpp Online Version 3.28 "aus Monomeren nur einer Art entstanden ist".
Unter Copolymer wird im Rahmen der vorliegenden Erfindung allgemein ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z. B. auch ein Copolymer aus drei verschiedenen Monomeren sein.

Bei den Monomeren des oder der bevorzugt enthaltenen Kohlenwasserstoffharze(s) kann es sich um alle dem Fachmann bekannten Monomere von Kohlenwasserstoffharzen handeln, wie aliphatische C₅-Monomere, weitere ungesättigte Verbindungen, die kationisch polymerisiert werden können, enthaltend Aromaten und/oder Terpene und/oder Alkene und/oder Cycloalkene.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln.
Gemäß Römpp Online Lexikon, Version 3.36 ist der Begriff "Olefine" die "Gruppenbezeichnung für acyclische und cyclische aliphatische Kohlenwasserstoffe mit einer oder mehreren re-aktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.
Bei den Alkenen kann es sich beispielsweise um 1-Buten und/oder 2-Buten und/oder Butadien handeln.

In einer bevorzugten Ausführungsform der Erfindung ist das Kohlenwasserstoffharz ausgewählt aus der Gruppe bestehend aus Inden-Cumaron-Harzen und/oder aliphatischen Cs-Harzen und/oder Kohlenwasserstoffharzen aus alpha-Methylstyrol und Styrol, wobei auch ein Gemisch verschiedener Harze denkbar ist.
Hiermit werden besonders gute Eigenschaften hinsichtlich Wärmeaufbau und Abriebresistenz erzielt.
Gemäß einer besonders vorteilhaften Ausführungsform der Erfindung enthält die Kautschukmischung wenigstens ein Inden-Cumaron-Harz. Ein derartiges Harz ist besonders gut geeignet, um das Eigenschaftsprofil der Kautschukmischung hinsichtlich Abrieb und Wärmeaufbau zu optimieren und deren Glasübergangstemperatur zu beeinflussen.

Das in der erfindungsgemäßen Kautschukmischung enthaltene Kohlenwasserstoffharz, weist bevorzugt einen Erweichungspunkt gemäß ASTM E 28 (Ring und Ball) von 60 bis 200 °C, bevorzugt 60 bis 150 °C, besonders bevorzugt 60 bis 120 °C, ganz besonders bevorzugt 60 bis 99 °C, und wiederum ganz besonders bevorzugt 80 bis 99 °C auf.
Mit einem Inden-Cumaron-Harz mit einem Erweichungspunkt gemäß ASTM E 28 (Ring und Ball) von 60 bis 150 °C, bevorzugt 80 bis 95 °C, ergibt sich insbesondere in Kombination mit den oben genannten Bestandteilen eine besonders gute Prozessierbarkeit der Kautschukmischung, insbesondere hinsichtlich der Extrudate vor der Vernetzung, bei gleichzeitig guten Abriebeigenschaften und einer hohen Chip-und-Chunk-Resistenz.

Gemäß einer bevorzugten Ausführungsform enthält die erfindungsgemäße Kautschukmischung wenigstens einen Weichmacher, wobei die Gesamtmenge an Weichmacher bevorzugt 1 bis 50 phr, besonders bevorzugt 1 bis 30 phr, wiederum bevorzugt 4 bis 15 phr, beträgt. Hierdurch ergibt sich insbesondere in Kombination mit den oben genannten Bestandteilen eine besonders gute Prozessierbarkeit der Kautschukmischung, insbesondere der Extrudate vor der Vernetzung, bei gleichzeitig guten Eigenschaften im Hinblick auf die zu lösende Aufgabe..
Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.
Der Weichmacher ist bevorzugt ausgewählt aus der Gruppe bestehend aus den oben genannten Weichmachern.
Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.
Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.

Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Harze, insbesondere Klebharze für innere Reifenbauteile, die nicht den oben bevorzugt genannten Kohlenwasserstoffharzen entsprechen,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) in den oben genannten Mengen enthalten sein.
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigem und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel D):

D) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.
Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Der erfindungsgemäßen Kautschukmischung werden bei deren Herstellung bevorzugt wenigstens ein Vulkanisationsmittel ausgewählt aus der Gruppe enthaltend, besonders bevorzugt bestehend aus, Schwefel und/oder Schwefelspender und/oder Vulkanisationsbeschleuniger und/oder Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugreifen, herstellen.

Besonders bevorzugt ist die Verwendung der Beschleuniger TBBS und/oder CBS und/oder Diphenylguanidin (DPG).
Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.
Gemäß einer bevorzugten Weiterbildung der Erfindung werden bei der Herstellung der schwefelvernetzbaren Kautschukmischung mehrere Beschleuniger in der Fertigmischstufe zugegeben.
Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion. Die Cap ist hierbei der Teil des Laufstreifens des Fahrzeugreifens, der mit der Fahrbahn in Berührung kommt, während die Base der radial darunter befindliche innere Teil des Laufstreifens ist, der nicht mit der Fahrbahn in Berührung kommt.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.
Als Body-Mischung werden hierbei die Kautschukmischungen für die inneren Bauteile eines Reifen, wie im Wesentlichen Squeegee, Innenseele (Innenschicht), Kernprofil, Gürtel, Schulter, Gürtelprofil, Karkasse, Wulstverstärker, Wulstprofil, Hornprofil und Bandage.
Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in Tabelle 1 zusammengefasst sind, näher erläutert werden.
Die mit "E" gekennzeichneten Mischungen sind hierbei erfindungsgemäße Mischungen, während es sich bei den mit "V" gekennzeichneten Mischungen um Vergleichsmischungen handelt. Die Mischungsherstellung erfolgte unter üblichen Bedingungen in drei Stufen in einem Labortangentialmischer.
Aus sämtlichen Mischungen wurden Prüfkörper durch Vulkanisation hergestellt und mit diesen Prüfkörpern für die Kautschukindustrie typische Materialeigenschaften bestimmt.

Für die obig beschriebenen Tests an Prüfkörpern wurden folgende Testverfahren angewandt:
- Shore-A-Härte (Einheit Shore A, abgekürzt ShA) bei Raumtemperatur (RT) gemäß DIN 53 505
- Bruchdehnung bei Raumtemperatur gemäß DIN 53 504
- Hochgeschwindigkeitsbruchdehnung als Reißenergie pro verformtem Volumen bei Raumtemperatur gemäß High Speed Tear Energy Test (HSTE) nach DIN EN 10 045
- Verlustfaktor tan δ (tangens delta) aus dynamisch-mechanischer temperaturabhängiger Messung gemäß DIN 53 513, 50/30 N; Temperaturdurchlauf (engl. "temperature sweep"), Messwert bei 60 °C

### Verwendete Substanzen (ergänzende Angaben zu Tabelle 1)

a) Ruß A: Raven ® 1200 in Form von Perlen (*engl.* beads), Fa. Birla Carbon: Jodadsorptionszahl gemäß ASTM D 1510 von 120 g/kg; DBP-Zahl gemäß ASTM D 2414 von 55 ml/100 g; NSA-Oberfläche gemäß ASTM D 6556 von 106 m²/g.
b) ESBR
c) Kohlenwasserstoffharze: 4 phr Inden-Cumarom-Harz mit einem Erweichungspunkt von 90 °C (NOVARES C 90, Ruetgers Germany GmbH) und 4 phr HC RESIN LIGHT AROM. (UNILENE A90 von Braskem Qpar)"
d) Sonstige Zusatzstoffe: Alterungsschutzmittel, Ozonschutzwachs, Zinkoxid, Stearinsäure, Prozesshilfsmittel
e) Vulkanisationsbeschleuniger: TBBS und DPG.

**Tabelle 1**

| **Bestandteile** | **Einh.** | **V1** | **V2** | **V3** | **E1** | **E2** | **E3** |
|---|---|---|---|---|---|---|---|
| SBR ^{b)} | phr | 100 | 100 | 100 | 100 | 100 | 100 |
| Ruß A ^{a)} | phr | - | - | - | 55 | 65 | 75 |
| Ruß (B) N 220 | phr | 55 | 65 | 75 | - | - | - |
| Harz ^{c)} | phr | 8 | 8 | 8 | 8 | 8 | 8 |
| RAE-Öl | phr | 8 | 8 | 8 | 8 | 8 | 8 |
| Sonstige Zusatzstoffe ^{d)} | phr | 17 | 17 | 17 | 17 | 17 | 17 |
| Beschleuniger ^{e)} | phr | 1,5 | 1,5 | 1,5 | 1,5 | 1,5 | 1,5 |
| Schwefel | phr | 1,6 | 1,6 | 1,6 | 1,6 | 1,6 | 1,6 |

| **Physikalische Eigenschaften** | | | | | | | |
|---|---|---|---|---|---|---|---|
| Härte RT | Shore A | 60,5 | 66,6 | 71 | 55 | 58,8 | 61,3 |
| Bruchdehnung | % | 657 | 606 | 533 | 773 | 753 | 754 |
| HSTE | MJ/m³ | 15 | 14,2 | 12,2 | 18,8 | 20,6 | 24,1 |
| tanD (60 °C) | | 0,26 | 0,30 | 0,35 | 0,23 | 0,27 | 0,31 |

Wie an Tabelle 1 erkennbar, zeigen die erfindungsgemäßen Mischungen E1, E2 und E3 enthaltend einen Ruß des Typs A im Vergleich zu den Mischungen V1, V2 und V3 mit einem konventionellen Ruß N220 (Ruß Typ B) eine deutlich höhere Bruchdehnung bei einer gleichzeitig ausreichend hohen Härte. Zusätzlich zeigen die erfindungsgemäßen Kautschukmischungen eine überraschenderweise verbesserte Hochgeschwindigkeitsbruchdehnung (HSTE) und damit überraschenderweise verbesserte Indikatoren für die "Chip & Chunk"-Resistenz. Gleichzeitig liegen die erfindungsgemäßen Kautschukmischungen auf einem besseren Wärmeaufbau-Niveau, da der Verlustfaktor tan delta (bei 60 °C) bei gleichem Füllgrad (Rußmenge) im Vergleich zu den Vergleichsmischungen geringer ist.
Ein Fahrzeugreifen, der wenigstens ein Vulkanisat der erfindungsgemäßen Mischung bevorzugt zumindest im Laufstreifen aufweist, zeichnet sich durch eine längere Haltbarkeit und eine hohe Langlebigkeit durch die vergleichsweise hohe "Chip & Chunk"-Resistenz bei gleichzeitig guten Abriebeigenschaften aus.

## Patentansprüche

1. Schwefelvernetzbare Kautschukmischung enthaltend wenigstens folgende Bestandteile:
- wenigstens einen Dienkautschuk, der ausgewählt ist aus der Gruppe bestehend aus synthetischem Polyisopren (IR) und natürlichem Polyisopren (NR) und Styrol-Butadien-Kautschuk (SBR) und Polybutadien (BR) und Butylkautschuk (IIR) und Halobutylkautschuk, und
- 3 bis 200 phr wenigstens eines Rußes A, welcher eine Jodadsorptionszahl gemäß ASTM D 1510 von 100 bis 140 g/kg und eine DBP-Zahl gemäß ASTM D 2414 von 50 bis 75 ml/100 g aufweist.

2. Kautschukmischung nach Anspruch 1, **dadurch gekennzeichnet, dass** die Menge des Rußes A 40 bis 200 phr beträgt.

3. Kautschukmischung nach einem der vorherigen Ansprüche, **dadurch gekennzeichnet, dass** sie 0,1 bis 20 phr wenigstens eines Kohlenwasserstoffharzes enthält.

4. Kautschukmischung nach einem der vorherigen Ansprüche, **dadurch gekennzeichnet, dass** sie 0,1 bis 10 phr wenigstens eines weiteren Rußes B enthält.

5. Kautschukmischung nach einem der Ansprüche 1 bis 3, **dadurch gekennzeichnet, dass** sie 0 phr an weiteren Rußen B enthält.

6. Vulkanisat, welches durch Schwefelvulkanisation wenigstens einer Kautschukmischung nach einem der Ansprüche 1 bis 5 erhalten wird.

7. Fahrzeugreifen, **dadurch gekennzeichnet, dass** er in wenigstens einem Bauteil wenigstens ein Vulkanisat wenigstens einer Kautschukmischung nach Anspruch 6 aufweist.

8. Fahrzeugreifen nach Anspruch 7, **dadurch gekennzeichnet, dass** er wenigstens ein Vulkanisat wenigstens einer Kautschukmischung nach Anspruch 6 zumindest im Laufstreifen aufweist.

## Claims

1. Sulfur-crosslinkable rubber mixture containing at least the following constituents:
- at least one diene rubber selected from the group consisting of synthetic polyisoprene (IR) and natural polyisoprene (NR) and styrene-butadiene rubber (SBR) and polybutadiene (BR) and butyl rubber (IIR) and halobutyl rubber and
- 3 to 200 phr of at least one carbon black A having an iodine adsorption number according to ASTM D 1510 of 100 to 140 g/kg and a DBP number according to ASTM D 2414 of 50 to 75 ml/100 g.

2. Rubber mixture according to Claim 1, **characterized in that** the amount of the carbon black A is 40 to 200 phr.

3. Rubber mixture according to any of the preceding claims, **characterized in that** it contains 0.1 to 20 phr of at least one hydrocarbon resin.

4. Rubber mixture according to any of the preceding claims, **characterized in that** it contains 0.1 to 10 phr of at least one further carbon black B.

5. Rubber mixture according to any of Claims 1 to 3, **characterized in that** it contains 0 phr of further carbon blacks B.

6. Vulcanizate obtained by sulfur vulcanization of at least one rubber mixture according to any of Claims 1 to 5.

7. Vehicle tyre, **characterized in that** it comprises in at least one component at least one vulcanizate of at least one rubber mixture according to Claim 6.

8. Vehicle tyre according to claim 7, **characterized in that** it comprises at least in the tread at least one vulcanizate of at least one rubber mixture according to Claim 6.

## Revendications

1. Mélange de caoutchouc réticulable au soufre contenant au moins les constituants suivants :
- au moins un caoutchouc diénique, qui est choisi dans le groupe constitué par le polyisoprène synthétique (IR) et le polyisoprène naturel (NR) et le caoutchouc de styrène-butadiène (SBR) et le polybutadiène (BR) et le caoutchouc de butyle (IIR) et le caoutchouc d'halobutyle, et
- 3 à 200 pce d'au moins un noir de carbone A, qui présente un indice d'adsorption d'iode selon ASTM D 1510 de 100 à 140 g/kg et un indice DBP selon ASTM D 2414 de 50 à 75 ml/100 g.

2. Mélange de caoutchouc selon la revendication 1, **caractérisé en ce que** la quantité du noir de carbone A est de 40 à 200 pce.

3. Mélange de caoutchouc selon l'une quelconque des revendications précédentes, **caractérisé en ce qu'**il contient 0,1 à 20 pce d'au moins une résine hydrocarbonée.

4. Mélange de caoutchouc selon l'une quelconque des revendications précédentes, **caractérisé en ce qu'**il contient 0,1 à 10 pce d'au moins un autre noir de carbone B.

5. Mélange de caoutchouc selon l'une quelconque des revendications 1 à 3, **caractérisé en ce qu'**il contient 0 pce d'autres noirs de carbone B.

6. Vulcanisat, qui est obtenu par vulcanisation au soufre d'au moins un mélange de caoutchouc selon l'une quelconque des revendications 1 à 5.

7. Pneu de véhicule, **caractérisé en ce qu'**il comprend dans au moins un composant au moins un vulcanisat d'au moins un mélange de caoutchouc selon la revendication 6.

8. Pneu de véhicule selon la revendication 7, **caractérisé en ce qu'**il comprend au moins un vulcanisat d'au moins un mélange de caoutchouc selon la revendication 6 au moins dans la bande de roulement.
